# EUROPÄISCHE PATENTSCHRIFT

(11) **EP 1 543 873 B1**
(45) Veröffentlichungstag und Bekanntmachung des Hinweises auf die Patenterteilung: **04.05.2011**
(21) Anmeldenummer: 04027978.8
(22) Anmeldetag: 25.11.2004
(51) Int. Cl.: B01D 53/04, B01J 20/24

(54) **Vorrichtung und Verfahren zum Abbau wenigstens eines in einem Gas, insbesondere einem Abgas, enthaltenen organischen Stoffs**
Device and process for decomposing, at least one organic compound contained in a gas, in particular, in an exhaust gas
Dispositif et procédè pour la degradation d'au moins un compose organique contenu dans un gaz, en particulier, dans un gaz d'échappement

(30) Priorität: 19.12.2003 DE 10360428
(43) Veröffentlichungstag der Anmeldung: 22.06.2005
(73) Patentinhaber: GSB mbH, 90411 Nürnberg (DE); Laskowski, Rainer, Dipl.-Ing., 32130 Enger (DE)
(72) Erfinder: KAASE, Christiane, D-49080 Osnabrück (DE); LASKOWSKI, Rainer, D-32130 Enger (DE); KOLB, Thomas, D-90571 Schwaig (DE); LEHMAN, Jörg, D-01723 Kesseldorf (DE); VORWERK, Rene, 39387 Oschersleben (DE)
(74) Vertreter: Meissner, Bolte & Partner

(56) Entgegenhaltungen:
- EP-A- 0 967 002
- EP-A- 1 386 622
- DE-A1- 10 063 182
- DE-A1- 19 809 479
- DE-A1- 19 919 623
- PATENT ABSTRACTS OF JAPAN Bd. 015, Nr. 178 (M-1110), 8. Mai 1991 (1991-05-08) & JP 03 039885 A (MITSUBISHI ELECTRIC CORP), 20. Februar 1991 (1991-02-20)

## Beschreibung

Die Erfindung betrifft eine Vorrichtung und ein Verfahren zum Abbau wenigstens eines in einem Gas, insbesondere einem Abgas, enthaltenen organischen Stoffs.

Organische Stoffe in Gasen können insbesondere flüchtige, organische Verbindungen (VOC = volatile organic compounds), brandbeschleunigendende Stoffe, Keime und Geruchsstoffe sowie Ablagerungen von Brandbeschleunigern, wie Fetten, oder geruchsbildenden Stoffen auf Flächen in Gas führenden Teilen, die durch das Gas mitgeführt wurden, umfassen. Solche organischen Stoffe können beispielsweise in der Abluft bzw. den Abgasen verschiedener industrieller Verarbeitungsprozesse aber auch in der Abluft aus Großküchen enthalten sein. Gelangen die vorgenannten Stoffe in ein Belüftungssystem, in einen abgeschlossenen Raum oder in die Umgebung, so können sie unter anderem ein gesundheitliches Risiko oder ein Sicherheitsrisiko, zum Beispiel eine Brandgefahr, darstellen oder zu einer Geruchsbelästigung führen.

Die vorgenannten organischen Stoffe lassen sich zum Beispiels unter Verwendung von aktiviertem Sauerstoff, vorzugsweise Ozon, atomarem Sauerstoff oder Sauerstoffionen, abbauen bzw. beseitigen oder zumindest vermindern. Ozon (O₃) und Sauerstoffradikale bzw. atomarer Sauerstoff (O) und Sauerstoffionen (O₂⁻) sind starke Oxidationsmittel und in der Lage Keime abzutöten sowie organische Stoffe zu oxidieren.

Bislang wurden Vorrichtungen oder Verfahren zur Abgasbehandlung auf Basis von aktivem Sauerstoff in Form von Sauerstoffionen, Sauerstoffradikalen oder Ozon hauptsächlich zur Reduzierung von Geruchsbelastungen eingesetzt. Zur Erzeugung der notwendigen Menge von Sauerstoffionen, Sauerstoffradikalen oder Ozon dienen dabei Geräte oder Einrichtungen bzw. Anlagen, die auf Basis von UV-Strahlung, koronarer Entladungen, dielektrisch behinderter Entladungen oder der Bildung von Plasma arbeiten. Diesen Ozon- oder Sauerstoffionenerzeugern werden häufig spezielle Einheiten nachgeschaltet, die einerseits eine Vergrößerung der notwendigen Reaktionsoberfläche garantieren und in einigen Fällen die auf dieser Oberfläche stattfindenden Reaktionen katalytisch beeinflussen. Derartige Einheiten sind beispielsweise als Sorbtionskatalysatoren oder einfach Katalysatoren bekannt. In einigen Fällen wird in dem Verfahren bzw. der Anlage oder Vorrichtung zudem ein Geruchssensor genutzt, um eine lastabhängige Behandlung der Abluft sicherzustellen. Um eine Reduzierung der ausgangsseitig noch vorhandenen Luftbelastung durch Sauerstoffionen, Sauerstoffradikale oder Ozon, das als gesundheitsschädlich einzustufen ist, sicherzustellen, wird in einigen Fällen ebenfalls ein Sensor eingesetzt.

Aus DE 199 19 623 ist beispielsweise ein Luftaufbereitungssystem zum Abbau von luftgetragenen Gerüchen, Keimen und Schadstoffen bekannt, das aus Ventilator, Hochspannungserzeugung, Ionisierungseinheit, Sorptionskatalysatoreinheit, Steuerungselektronik sowie Sensorsystem besteht. In der Ionisierungseinheit werden Schadstoffe und Luftmoleküle teilweise ionisiert, wobei unter anderem Sauerstoffradikale, Sauerstoffionen und Ozon erzeugt werden. Der Ionisierungseinheit ist in Strömungsrichtung ein Katalysator, vorzugsweise aus Siliziumoxid oder Aluminiumoxid, nachgeschaltet, an dessen Oberfläche die gasförmigen Reaktionspartner adsorbieren, so dass zum einen die Aktivierungsenergie für die Reaktion herabgesetzt wird und zum anderen die Konzentration der Reaktionspartner lokal erhöht wird und somit eine höhere Ausbeute erzielt werden kann. Mit einem weiteren Sorptionskatalysator wird anschließend nicht verbrauchtes Ozon abgebaut.

Mit Hilfe eines der vorangehend beschriebenen Verfahren bzw. einer entsprechenden Vorrichtung können flüchtige organische Verbindungen (VOC), Keime und Gerüche sowie brandbeschleunigendende Stoffen und Ablagerungen von Brandbeschleunigern in Abluftkanälen reduziert werden. In der Praxis wurde jedoch beobachtet, dass auch bei Verwendung eines Sorptionskatalysators eine Verweilzeit der Reaktanden (organische Stoffe und aktivierter Sauerstoff) in einer Reaktionszone für einen wirksamen Abbau der organischen Stoffe, insbesondere der VOC-Lasten, häufig nicht ausreichend lang ist. Um eine entsprechend geringe Konzentration organischer Stoffe nach der Reaktionszone zu gewährleisten, beispielweise um einen vorgeschriebenen Grenzwert einzuhalten, ist dann die Konzentration des aktivierten Sauerstoffs zu erhöhen, was jedoch zum einen zu einer Erhöhung der Betriebskosten führen kann und zum anderen insbesondere bei der Verwendung von Ozon, das als gesundheitsschädlich einzustufen ist, vermieden werden sollte.

Es ist nun Aufgabe der Erfindung eine Vorrichtung und ein Verfahren zum Abbau von in Gasen enthaltenen organischen Stoffen bereitzustellen, bei denen die vorgenannten Nachteile beim Stand der Technik wenigstens teilweise überwunden oder zumindest vermindert werden, insbesondere ist es eine Aufgabe der Erfindung die Verweilzeit der organischen Stoffe in der Reaktionszone zu verlängern bzw. einen effizienteren Abbau derselben zu ermöglichen.

Diese Aufgabe wird hinsichtlich der Vorrichtung mit Merkmalen des Patentanspruchs 1 und hinsichtlich des Verfahrens mit den Merkmalen des Patentanspruchs 16 gelöst. Vorteilhafte Ausgestaltungen und Weiterbildungen ergeben sich aus den von Anspruch 1 und Anspruch 16 abhängigen Ansprüchen.

Die Vorrichtung gemäβ Anspruch 1 zum Abbau wenigstens eines in einem Gas, insbesondere einem Abgas, enthaltenen organischen Stoffs, umfasst dazu wenigstens eine Sauerstoffaktivierungseinrichtung und wenigstens eine Speichereinheit zum Speichern wenigstens eines organischen Stoffs, wobei die Speichereinheit der Sauerstoffaktivietungseinrichtung in einer Strömungsrichtung des Gases nachgeordnet ist, und wobei die Speichereinheit wenigstens ein organisches Speichermaterial und/oder wenigstens ein Speichermaterial aus nachwachsenden Rohstoffen umfasst.

Organische Stoffe im Gas, insbesondere Abgas, können unter anderem flüchtige, organische Verbindungen (VOC), brandbeschleunigendenden Stoffe, Keime und Geruchsstoffe sowie Stoffe, die zu Ablagerungen auf Flächen in Gas führenden Teilen führen können, zum Beispiel Brandbeschleuniger, wie Fette, oder geruchsbildenden Stoffe, sein.

Der aktivierte Sauerstoff umfasst Sauerstoffionen (O₂⁻), Sauerstoffradikale (O) und Ozon (O₃). Der aktivierte Sauerstoff wird in einer oder mehreren hierfür vorgesehenen Sauerstoffaktivierungseintichtungen erzeugt. Ist das mit organischen Stoffen beladene Gas Luft, was in den meisten Anwendungen der Fall ist, so kann durch die Sauerstoffaktivierungseinrichtung der in der Luft enthaltene Sauerstoff aktiviert werden. Dabei können durch die Sauerstoffaktivierungseinrichtung auch weitere mitgeführte Stoffe, beispielsweise mitgeführte organischen Stoffe oder weitere Luftbestandteile, wenigstens teilweise aktiviert werden, insbesondere inoisiert werden.

Darüber hinaus ist es auch möglich, falls das Gas keinen Sauerstoff enthält, oder um eine höhere Konzentration an aktiviertem Sauerstoff zu erhalten und damit den Wirkungsgrad der Vorrichtung zu erhöhen, zusätzlichen Sauerstoff zum Aktivieren in die Sauerstoffaktivierungseinrichtung oder vor der Sauerstoffaktivierungseinrichtung in den Gasstrom mit den organischen Stoffen zu geben.

Das organische Speichermaterial kann zum Beispiel aus einer im wesentlichen festen organische Verbindung, beispielsweise einer Kunststoffverbindung bestehen. Von dem Begriff Speichermaterial aus nachwachsenden Rohstoffen sind Materialien tierischen oder pflanzlichen Ursprungs umfasst. Das Speichermaterial ist vorzugsweise regenerierbar, wobei das Speichermaterial entweder durch den Abbau der gespeicherten organischen Stoffe unter Einwirkung des aktivierten Sauerstoffs oder durch weitere einfache Verfahren gereinigt bzw. regeneriert werden kann. Um bei einem mit unterschiedlichen organischen Stoffen beladenen Gasstrom möglichst viele organische Stoffe im Speichermaterial festzuhalten bzw. zu speichern kann auch eine Mischung aus verschieden organischen Speichermaterialien und/oder Speichermaterialien aus nachwachsenden Rohstoffen verwendet werden.

Bei dem Verfahren gemäß Anspruch 16 zum Abbau wenigstens eines in einem Gas, insbesondere einem Abgas, enthaltenen organischen Stoffs, unter Verwendung der Vorrichtung nach Anspruch 1 oder einem der auf Anspruch 1 rückbezogenen Ansprüche, wird aktivierter Sauerstoff erzeugt und reagiert der aktivierte Sauerstoff mit wenigstens einem organischen Stoff in dem Gas, wobei wenigstens ein organischer Stoff zumindest teilweise in wenigstens einem organischen Speichermaterial und/oder in wenigstens einem Speichermaterial aus nachwachsenden Rohstoffen gespeichert wird, insbesondere adsorbiert und/oder absorbiert wird, und wobei der organische Stoff in dem Speichermaterial wenigstens teilweise abgebaut wird.

Ein der Erfindung zugrundeliegender Gedanke ist also durch die Verwendung wenigstens eines organischen Speichermaterials und/oder wenigstens eines Speichermaterials aus nachwachsenden Rohstoffen, das wenigstens einen organischen Stoff aus dem Gasstrom festhalten bzw. speichern, insbesondere adsorbieren und/oder absorbieren, kann, eine möglichst lang Verweilzeit dieses Stoffes in einer in der Speichereinheit gebildeten Reaktionszone zu erzielen, so dass der organische Stoff in dieser Reaktionszone durch den aktivierten Sauerstoff wirksam abgebaut werden kann.

Die Speichereinheit bzw. das Speichermaterial wird dazu im belasteten Gasstrom, beispielsweise ein Abluft-, Zuluft-, Umluft-, Außenluft- oder Fortluftstrom derart montiert, dass unter Verwendung der davor platzierten wenigstens einen Sauerstoffaktivierungseinrichtung das Gas weitestgehend von Laststoffen wie VOC's, Keimen, Gerüchen und Aerosolen befreit wird und dieses danach ins Freie und/oder in Räume geleitet werden kann, eventuell nach einer Reduzierung von überschüssigem Ozon, ohne dass hierdurch eine Gefährdung von Personen zu befürchten ist. In dem beschriebenen Speichermaterial werden die organische Stoffe über eine gewisse Verweilzeit gespeichert und kontinuierlich durch den aktivierten Sauerstoff abgebaut, was zu einer Regeneration des Speichermaterials führt.

Ein weiterer Vorteil der Vorrichtung und des Verfahrens gemäß der Erfindung liegt darin, dass die Reduzierung von brandbeschleunigenden Ablagerungen, insbesondere Fetten, auf Oberflächen von Gas führenden, beispielsweise Abluft, Zuluft, Umluft, Außenluft oder Fortluft führenden Teilen, sichergestellt und zusätzlich die Geruchsbelastung reduziert ist.

In einer besonders vorteilhaften Ausführungsform der Vorrichtung gemäß der Erfindung umfasst des wenigstens eine Speichermaterial aus nachwachsenden Rohstoffen wenigsten einen pflanzlichen Stoff und/oder wenigstens einen tierischen Stoff, insbesondere Schafwolle. Eingesetzt werden können alle pflanzlichen oder tierischen Stoffe, die ein Speichervermögen für organische Stoffe aufweisen, das bedeutet, Materialien, die organische Stoffe adsorbieren oder absorbieren können, die vorzugsweise auch ein Speichervermögen für Wasser aufweisen und bevorzugt Proteine, insbesondere Keratine umfassen, insbesondere tierische Felle. In einigen Fällen kann aber auch der Einsatz von Holz bzw. Holzprodukten vorteilhaft sein. Es kann auch eine Mischung verschiedener Materialien eingesetzt werden, beispielweise um bei einer großen Anzahl verschiedener organischer Stoffe im Gas, möglichst viele dieser Stoffe im Speichermaterial zu speichern.

Besonders bevorzugt ist der Einsatz von Schafwolle als Speichermaterial für VOCs. Flüchtige organische Verbindungen können sich in großer Menge an die Schafswolle anlagern. Schafwolle als ein typisches Faserprotein besteht zu 97 % aus Proteinen, die den Keratinen zugeordnet werden. Mit Körpereiweiß reagierende Luftschadstoffe reagieren nach wissenschaftlichen Erkenntnissen mit dem Wollprotein (Keratin) in gleicher Weise. Die Schafwolle besitzt also eine im Wesentlichen katalytische Wirkung für bestimmte organische Verbindungen. Schafwolle ist zudem sehr kostengünstig und in verschiedenen Formen erhältlich, beispielsweise in der Form des Produkts Kairatin®. Die Wirksamkeit von Kairatin® beispielsweise, konnte zwischenzeitlich bei folgenden Schadstoffen nachgewiesen werden:
Irreversible Bindung (Umwandlung und Neutralisation) wurde beobachtet bei Formaldehyd, Acetaldehyd, Propionaldehyd, Butyraldehyd, Pentanal, Hexanal, Heptanal, Octanal, Nonanal, Decanal, Benzaldehyd, Furfural, Acrolein, Crotonaldehyd, Glyoxal, Glutardialdehyd, Isocyanate, Nitrosamine, Styrol.
Reversible Aufnahmemöglichkeit (Speicherung bzw. Physisorption) wurde beobachtet bei Toluol, Xylol und Kresol, die sehr stark adsorbiert werden; Stickoxiden und Schwefeldioxid, die auch umgewandelt werden; Phenolen, Pentachlorphenol (PCP). Terpene, Ester und Amine werden in jedem Fall adsorbiert, teilweise findet eine Umsetzung statt, zum Beispiel bei verschiedenen Estern und Aminen.

Das wenigstens eine Speichermaterial besteht vorzugsweise aus Fasern und/oder aus Gewebe und/oder aus Filz. Für einen hohen Umsatz der organischen Stoffe bzw. eine hohe Abbaurate ist eine möglichst große Oberfläche des wenigstens einen Speichermaterials vorteilhaft. Eine besonders groβe Oberfläche kann zum Beispiel erreicht werden, wenn ein Filz verwendet wird.

In einer besonders zweckmäßigen Ausführungsform umfasst das wenigstens eine Speichermaterial wenigstens einen Zusatzstoff, insbesondere wenigstens einen Trägerstoff und/oder wenigstens einen Reaktionskatalysator. Der Trägerstoff kann zum einen zur Stabilisierung des Speichermaterials bzw. der Speichereinheit beitragen und zum anderen auch als funktionales Element dienen und liegt vorzugsweise als Gitter oder Fasern vor. Ist der Trägerstoff beispielsweise aus einem Metall oder einem metallisierten Material, insbesondere aus einem metalloxidbeschichteten Gitterelement gebildet, so können sich Sauerstoffionen am Trägermaterial anlagern, wodurch das Trägermaterial und/oder das Speichermaterial statisch aufgeladen werden können. Dadurch kann die Anlagerung organischer Stoffe im oder am Speichermaterial begünstigt und eine höherer Umsatz bzw. eine höhere Abbaurate der organischen Stoffe erzielt werden. Ferner kann am Trägerstoff selbst eine Abbaureaktion der organischen Stoffe erfolgen, wobei dieser eine katalytische Wirkung haben kann, wenn er beispielsweise eine Metallverbindung (z.B. Kupfer haltig) mit katalytischer Wirkung umfasst. Darüber hinaus kann das Speichermaterial wenigstens einen Reaktionskatalysator enthalten und/oder mit wenigstens einem Reaktionskatalysator beschichtet sein, wodurch die Aktivierungsenergie der Abbaureaktion herabgesetzt wird und ebenfalls ein höherer Umsatz bzw. eine höhere Abbaurate der organischen Stoffe erreicht werden kann. Als Reaktionskatalysator kann beispielsweise mit einem Metalloxid beschichteter Braunstein oder Kaliumpermanganat auf einem Träger, insbesondere Ton (Purafil), vorzugsweise Braunstein, Verwendung finden.

Insbesondere vorteilhaft ist es auch, wenn die Speichereinheit wenigstens ein Gitterelement umfasst, das das Speichermaterial wenigstens teilweise umgibt. Das Gitterelement ist vorzugsweise in Strömungsrichtung des Gases vor dem wenigstens einen Speichermaterial und/oder in Strömungsrichtung des Gases nach dem wenigstens einen Speichermaterial, an das Speichermaterial angrenzend angeordnet. Das Gitterelement kann zum einen dazu dienen das Speichermaterial zusammenzuhalten, um eine kompakte sowie leicht und einfach zu montierende Speichereinheit zu erhalten, wobei eine oder mehrere solcher Speichereinheiten eine definierte Reaktionszone bilden kann bzw. können.

Zum anderen kann das Gitterelement auch zu einer statischen Aufladung des Speichermaterials beitragen und/oder die Abbaureaktion unterstützen, wie vorangehend im Zusammenhang mit dem Trägerstoff beschrieben. Besonders bevorzugt ist es dabei, wenn das Gitterelement wenigstens zum Teil aus einem elektrisch leitfähigen Werkstoff besteht oder einen elektrisch leitfähigen Werkstoff, vorzugsweise an einer Gitteroberfläche, insbesondere ein Metall, vorzugsweise Kupfer oder eine kupferhaltige Legierung, umfasst. Beispielsweise kann hierfür ein Metallelement bzw. ein Metallgitter mit einer Kupferlösung behandelt werden.

In einer besonders bevorzugten Ausführungsform der Vorrichtung gemäß der Erfindung umfasst die wenigstens eine Sauerstoffaktivierungseinrichtung wenigstens eine Ozonerzeugungsvorrichtung und/oder wenigstens eine Sauerstoffionenerzeugungsvorrichtung. Eine Ozonerzeugungsvorrichtung und/oder eine Sauerstoffionenerzeugungsvorrichtung können in den Gasstrom integriert sein und das mit organischen Stoffen beladene Gas und/oder den darin enthaltenen Sauerstoff aktivieren, so dass wenigstens Ozon und/oder Sauerstoffionen und/oder Sauerstoffradikale entstehen. Darüber hinaus ist es möglich eine Ozonerzeugungsvorrichtung und/oder eine Sauerstoffionenerzeugungsvorrichtung extern anzuordnen und den aktivierten Sauerstoff dem Gasstrom mit den organischen Stoffen vor dem Eintritt in die Speichereinheit zuzuführen. Als Ozonerzeugungsvorrichtung und Sauerstoffionenerzeugungsvorrichtung können prinzipiell alle geeigneten und aus dem Stand der Technik bekannten Vorrichtungen verwendet werden. Insbesondere können Geräte oder Einrichtungen bzw. Anlagen, die auf Basis von UV-Strahlung, koronarer Entladungen, dielektrisch behinderter Entladungen oder der Bildung von Plasma arbeiten, zum Einsatz kommen.

Zur Vermeidung einer zu hohen Last an Ozon ausgangsseitig der Speichereinheit und nach erfolgreichem Abbau der organischen Stoffe und brandbeschleunigenden Ablagerungen, ist vorzugsweise eine Ozonreduzierungseinrichtung vorgesehen, die der Speichereinheit in Strömungsrichtung nachgeordnet ist. Dies kann beispielsweise erforderlich sein, um nach gesetzlichen Bestimmungen vorgeschriebene Ozonwerte nicht zu überschreiten und die Gefährdung von Personen durch Ozon auszuschließen. Ein weiterer Vorteil der Verwendung einer Ozonreduzierungseinrichtung ist, dass mögliche korrosive Angriffe dieser starken Oxidative (Ozon und Sauerstoffradikale) auf von brandbeschleunigenden Stoffen, wie z. B. Fetten, gereinigte gasführende Teile verringert oder ganz ausgeschlossen werden können.

Als Ozonreduzierungseinrichtung wird vorzugsweise ein katalytisch wirkendes System verwendet, das einen Ozonkatalysator umfasst, insbesondere ein Manganoxid und/oder ein Kupferoxid und/oder ein Oxid eines Übergangsmetalls, insbesondere Palladium, das vorzugsweise auf einem Trägermaterial, beispielsweise auf Aktivkohle, aufgebracht ist. Zur Vermeidung einer zu hohen Last an Ozon oder aktiviertem Sauerstoff ausgangsseitig kann das katalytische System zur Ozonreduzierung separat angebracht oder in das gesamte Gasbehandlungssystem fest integriert werden.

Eine Ozonreduzierungseinrichtung kann auch eine Einrichtung zur Bestimmung der Ozonkonzentration nach der Speichereinheit umfassen. Damit kann eine einfache Ozonüberwachung realisiert werden. Wird beispielsweise eine zu hohe Ozonmenge nach der Speichereinheit detektiert, wird das entsprechende Signal einer vorhandenen Regelung als Eingangsgröße geliefert und die Ozonerzeugung in der Ozonerzeugungsvorrichtung oder in der Sauerstoffinonenerzeugungsvorrichtung reduziert.

Aus diesem Grund ist es besonders bevorzugt, in Strömungsrichtung nach der Speichereinheit und/oder nach der Ozonreduzierungseinrichtung wenigstens einen Sensor zur Überwachung der Ozonkonzentration vorzusehen. Wird ein katalytisches System zur Ozonreduzierung eingesetzt, so ist der Sensor vorzugsweise nach der Ozonreduzierungseinrichtung angeordnet, um den katalytischen Abbau von Ozon überwachen zu können.

Insbesondere vorteilhaft ist es auch, wenn in Strömungsrichtung vor der wenigstens einen Sauerstoffaktivierungseinrichtung und/oder in Strömungsrichtung vor und/oder nach der Ozonreduzierungseinrichtung wenigstens ein Sensor zur Überwachung der Stoffkonzentration wenigstens eines organischen Stoffs, insbesondere einer VOC-Konzentration, vorgehen ist. Als Sensoren können optoelektronische Elemente, herkömmliche hochintegrierte mikroelektronische aber auch mikromechanische Sensoren, Systeme der Nanotechnologie, spektroskopische, chemische sowie Biosensoren zum Einsatz kommen. Zur Überwachung der Beladung der Kanaloberflächen mit organischen Stoffen kann beispielsweise optischer Sensor verwendet werden.

Die überwachten Konzentrationen der organischen Stoffe und des Ozons können vorteilhaft zur Steuerung und Regelung der gesamten Prozesse in der erfindungsgemäßen Vorrichtung herangezogen werden. Die Vorrichtung gemäß der Erfindung umfasst hierzu vorzugsweise eine Steuereinrichtung zur Steuerung und Regelung, insbesondere zur Steuerung und Regelung der wenigstens einen Sauerstoffaktivierungseinrichtung.

In einer besonders zweckmäßigen Ausführungsform ist zudem eine Fördereinrichtung zum Transport des Gases durch die Speichereinheit, insbesondere ein Ventilator, vorgesehen. Dadurch wird gewährleistet, dass das Gas die Speichereinheit gleichmäßig durchströrnt. Darüber hinaus ist es vorteilhaft, wenn der wenigstens einen Sauerstoffaktivierungseinrichtung in Strömungsrichtung wenigstens ein Filterelement vorgeordnet ist, insbesondere ein Fettabscheidefilter und/oder ein Grobfilter und/oder ein Feinfilter, so dass grobe Verunreinigungen im Gas, insbesondere Abgas, vorab abgeschieden werden und sich nicht auf gasführenden Teilen ablagern oder das Speichermaterial verstopfen können.

In einer besonders vorteilhaften Ausführungsform des Verfahrens gemäß Anspruch 22 zum Abbau wenigstens eines in einem Gas, insbesondere einem Abgas, enthaltenen organischen Stoffs, wird der aktivierte Sauerstoff, insbesondere Ozon und/oder Sauerstoffradikale und/oder Sauerstoffionen, in einem Rohgasstrom erzeugt. Der Rohgasstrom ist der mit organischen Stoffen beladene Gasstrom aus einer organische Stoffe erzeugenden Quelle. Zur Erzeugung des aktivierten Sauerstoffs, kann wie vorangehend beschrieben, wenigstens eine Sauerstoffaktivierungseinrichtung, insbesondere eine Ozonerzeugungsvorrichtung und/oder eine Sauerstofferzeugungsvorrichtung im Rohgasstrom vorgesehen sein.

Vor dem Durchströmen des Speichermaterials, insbesondere vor dem Erzeugen von aktiviertern Sauerstoff, wird der Rohgasstrom vorzugsweise in einer

Filtereinheit gereinigt. Dabei kann der Rohgasstrom beispielsweise über einen Fettabscheidefilter und/oder einen Grobfilter und/oder einen Feinfilter geführt werden, so dass gröbere Verunreinigungen, insbesondere Staubpartikel oder Tropfen aus dem Rohgasstrom entfernt werden. Dadurch wird zum einen erreicht, dass Ablagerungen, beispielsweise brandbeschleunigender Stoffe, an gasführenden Teilen und am Speichermaterial vermindert werden. Darüber hinaus wird sichergestellt, dass beispielsweise ein Reaktionskatalysator oder Ozonkatalysator nicht durch nicht katalytisch wirkende Stoffe belegt und in seiner Funktion beeinträchtigt wird.

Insbesondere bevorzugt ist es, wenn der Abbau wenigstens eines organischen Stoffs durch das wenigstens eine Speichermaterial und/oder wenigstens einen dem Speichermaterial zugegebenen Reaktionskatalysator katalysiert wird. Durch den Reaktionskatalysator wird die Reaktionsgeschwindigkeit der Abbaureaktion erhöht und damit auch die Abbaurate des wenigstens einen organischen Stoffes. Der organische Stoff kann so sehr schnell und nahezu vollständig abgebaut werden. Vorzugsweise wird das Speichermaterial so ausgewählt, dass es für den Abbau wenigstens eines organischen Stoffs ein katalytische Wirkung aufweist. So kann beispielsweise für den Abbau von den in Zusammenhang mit der Wirkung von Keratin bzw. Kairatin® vorangehend angeführten organischen Verbindungen Schafwolle, die bei dem erfindungsgemäßen Verfahren bevorzugt eingesetzt wird, katalytisch wirken. Das Speichermaterial kann aber auch mit wenigstens einem Reaktionskatalysator vermischt und/oder mit diesem beschichtet sein. Als Reaktionskatalysatoren können unter anderem die im Zusammenhang mit dem Verfahren vorangehend beschriebenen katalytisch wirkenden Stoffe zum Einsatz kommen.

Durch Abbau des wenigstens einen in dem Speichermaterial gespeicherten organischen Stoffes wird vorzugsweise das wenigstens eine Speichermaterial regeneriert.

Zudem kann es vorteilhaft sein, wenn das wenigstens eine Speichermaterial Feuchtigkeit aus dem Gas aufnimmt. Das kann zum einen vorteilhaft für die Abbaureaktion sein und zum anderen einer Korrosion in den gasführenden Teilen vorbeugen.

In einer besonders bevorzugten Ausführungsform, werden bzw. wird überschüssiges aus dem Speichermaterial austretendes Ozon und/oder Sauerstoffradikale in einem Reingasstrom katalytisch in Sauerstoff umgewandelt, insbesondere unter Verwendung von Manganoxid und/oder Kupferoxid und/oder einem Oxid eines Übergangsmetalls, insbesondere Palladium, als Katalysator. Dadurch wird ein Angriff gasführender Teile durch im Reingasstrom befindliche Oxidative (Ozon und Sauerstoffradikale) reduziert und es können eventuell vorgegebene Ozongrenzwerte eingehalten werden.

Insbesondere vorteilhaft ist es, wenn durch Anlagerung von Sauerstoffionen an wenigstens ein Gitterelement aus zumindest teilweise elektrisch leitfähigem Material, das das Speichermaterial zumindest teilweise umgibt, das Gitterelement und das Speichermaterial aufgeladen werden, wodurch eine Verweilzeit wenigstens eines organischen Stoffs im Speichermaterial erhöht wird.

Zur Steuerung oder Regelung des Verfahrens gemäß der Erfindung wird vorzugsweise die Konzentration eines organischen Stoffes im Rohgasstrom und/oder die Konzentration eines organischen Stoffes im Reingasstrom und/oder die Konzentration von Ozon im Reingasstrom bestimmt und/oder eine Menge erzeugter aktivierter Sauerstoff, insbesondere eine Ozonmenge und/oder eine Menge Sauerstoffradikale und/oder eine Sauerstoffionenmenge, im Rohgasstrom in Abhängigkeit wenigstens einer der Konzentrationen gesteuert oder geregelt.

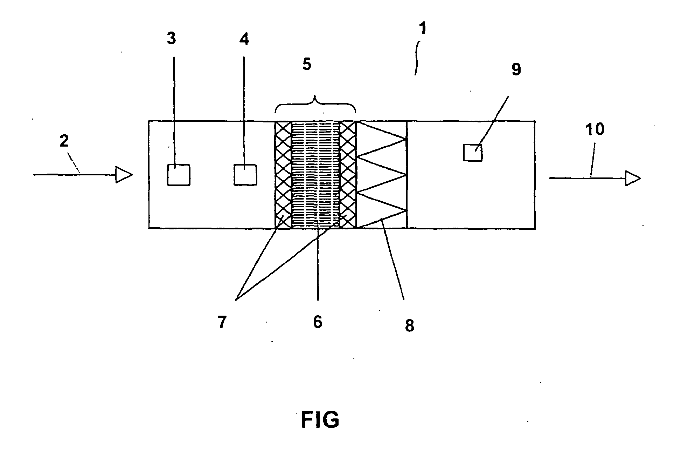

Die Erfindung wird im Folgenden anhand eines Ausführungsbeispiels und unter Bezugnahme auf die beiliegende Zeichnung weiter erläutert. Die Figur zeigt in schematischer Darstellung eine vorteilhafte Ausführungsform der Vorrichtung gemäß der Erfindung.

In der Figur ist eine vorteilhafte Ausführungsform der Vorrichtung gemäß der Erfindung zur Erläuterung des erfindungsgemäßen Verfahrens dargestellt. In einem Abgaskanalabschnitt 1, in dem ein Abgas zwangsgeführt und transportiert wird, befindet sich eine Ozonerzeugungsvorrichtung 3 und eine Sauerstoffionenerzeugungsvorrichtung 4. Ein mit organischen Stoffen wie VOCs, Keimen, Gerüchen oder brandbeschleunigenden Stoffen beladener Rohgasstrom 2 wird in den in der Figur dargestellten Abgaskanalabschnitt 1 eingeführt. Die Strömungsrichtung des Rohgasstromes 2 ist durch den Pfeil dargestellt. Der Rohgasstrom 2 kann vor dem Einführen in den Abgaskanalabschnitt 1 über wenigstens eine Filtereinheit (hier nicht dargestellt), zum Beispiel einen Grobfilter, einen Fettabscheidefilter und einen Feinfilter, geführt werden.

Mit Hilfe der Ozonerzeugungsvorrichtung 3 und der Sauerstoffionenerzeugungsvorrichtung 4 wird der in dem Abgasstrom enthaltene Sauerstoff sowie eventuell weitere Abgasbestandteile aktiviert. Dabei entstehen wenigstens Ozon, Sauerstoffradikale und Sauerstoffionen, die die in dem Abgasstrom enthaltenen organischen Stoffe wenigstens teilweise oxidieren können. Ist die im Abgasstrom enthaltene Sauerstoffmenge nicht ausreichend für den Abbau der organischen Stoffe, so kann dem Rohgasstrom 2 vor der Ozonerzeugungsvorrichtung 3 und der Sauerstoffionenerzeugungsvorrichtung 4 zusätzlich Sauerstoff zugeführt werden oder über die Ozonerzeugungsvorrichtung 3 und der Sauerstoffionenerzeugungsvorrichtung 4 bereits aktivierter Sauerstoff in den Rohgasstrom 2 abgegeben werden.

Der Ozonerzeugungsvorrichtung 3 und der Sauerstoffionenerzeugungsvorrichtung 4 ist in Strömungsrichtung eine Speichereinheit 5 nachgeordnet. Die Speichereinheit 5 umfasst ein Speichermaterial 6, vorzugsweise ein Filz oder Fasern aus Schafwolle, und zwei Gitterelemente 7, die in Strömungsrichtung vor dem Speichermaterial 6 und in Strömungsrichtung nach dem Speichermaterial 6 an dieses angrenzen. Die Gitterelemente 7 bestehen vorzugsweise aus einem mit einer Kupferlösung behandelten Metallgitter. Je nachdem wie hoch die erwartete Beladung des Rohgasstromes 2 ist, können bis zu n solcher Speichereinheiten 5 hintereinander angeordnet werden.

Im Speichermaterial 6 wird wenigstens ein organischer Stoff, vorzugsweise alle organische Stoffe, aus dem Rohgasstrom über eine gewisse Verweildauer gespeichert, insbesondere durch Adsorption an der Oberfläche des Speichermaterials 6 oder durch Absorption. Der aktivierte Sauerstoff reagiert dann mit dem jeweiligen organischen Stoff, in der Regel in einer Oxidationsreaktion, wobei der organische Stoff zersetzt wird. Beschleunigt werden kann die Reaktion durch eine katalytische Wirkung des Speichermaterials 6 und/oder durch einen dem Speichermaterial 6 zugegebenen oder auf der Oberfläche des Speichermaterials 6 aufgebrachten Reaktionskatalysator. Durch Anlagerung von Sauerstoffionen an den Gitterelementen 7 kann eine statische Aufladung der Gitterelemente 7 und/oder des Speichermaterials 6 erfolgen, so dass die Anlagerung des wenigstens einen organischen Stoffes am Speichermaterial 6 begünstigt wird und die Verweilzeit des organischen Stoffes in der Speichereinheit 5 auf diese Weise zudem erhöht werden kann.

Die wenigstens eine Speichereinheit 5 bildet also eine Reaktionszone in dem Abgaskanalabschnitt 1. Da eine Reaktion zwischen dem wenigstens einen organischen Stoff und dem aktivierten Sauerstoff bereits vor der Speichereinheit 5 erfolgt bildet sich eine weitere Reaktionszone zwischen der Ozonerzeugungsvorrichtung 3 und/oder der Sauerstoffionenerzeugungsvorrichtung 4 und der Speichereinheit 5.

Der Speichereinheit 5 ist in Strömungsrichtung eine Ozonreduzierungseinrichtung 8 nachgeordnet, die auf einer Gitterstruktur einen Ozonkatalysator, beispielsweise ein Kupferoxid (CuO) und/oder ein Manganoxid (MnO₂) umfasst. In der Ozonreduzierungseinrichtung 8 wird überschüssiges Ozon und auch Sauerstoffradikale zu Sauerstoff oxidiert, um vorgegeben Grenzwerte einhalten zu können. Der Abgasstrom verlässt die Ozonreduzierungseinrichtung 8 als Reingasstrom 10, der in einen Raum oder in die Umgebung abgegeben oder einer weiteren Verwendung zugeführt werden kann.

Im Reingasstrom befindet sich wenigstens ein Sensor 9 zur Bestimmung und/oder Überwachung der Ozonkonzentration und/oder der Konzentration wenigstens eines organischen Stoffes. Mit diesen Konzentrationswerten kann die Vorrichtung über eine Steuereinheit (nicht dargestellt) gesteuert oder geregelt werden, insbesondere die Ozonerzeugungsvorrichtung 3 und der Sauerstoffionenerzeugungsvorrichtung 4 beziehungsweise die erzeugte Menge an aktiviertem Sauerstoff. Für eine exakte Steuerung oder Regelung wird vorzugsweise auch eine Konzentration des wenigstens einen organischen Stoffes im Rohgasstrom 2 bestimmt (nicht dargestellt). Zur Detektierung der Belastung der Abgaskanaloberfläche durch Ablagerungen mit brandbeschleunigenden Stoffen kann ein entsprechender optischer Sensor im Rohgasstrom 2 angebracht sein (nicht dargestellt). Als Sensoren können alle hierzu geeigneten Sensoren verwendet werden. Die Verarbeitung der eingehenden Messgrößen oder Störgrößen kann dabei so erfolgen, dass diese über einen vorab in der Steuereinheit programmierten oder digital fest verschalteten Programmablauf ausgewertet werden und eine entsprechende Führungsgröße oder Stellgröße für die Ozonerzeugungsvorrichtung 3 und/oder die Sauerstoffionenerzeugungsvorrichtung 4 bereitgestellt wird.

### Bezugszeichenliste

- 1: Abgaskanalabschnitt
- 2: Rohgasstrom
- 3: Ozonerzeugungsvorrichtung
- 4: Sauerstoffionenerzeugungsvorrichtung
- 5: Speichereinheit
- 6: Speicherelement
- 7: Gitterlement
- 8: Ozonreduzierungseinrichtung
- 9: Sensor
- 10: Reingasstrom

## Patentansprüche

1. Vorrichtung zum Abbau wenigstens eines in einem Gas, insbesondere einem Abgas, enthaltenen organischen Stoffs, umfassend
a) wenigstens eine Sauetstoffaktivitrungseinrichtung (3, 4) und
b) wenigstens eine Speichereinheit (5) zum Speichern wenigstens eines organischen Stoffs,
c) wobei die Speichereinheit (5) der Sauerstoffaktivierungseinrichtung (3, 4) in einer Strömungsrichtung des Gases nachgeordnet ist und
d) wobei die Speichereinheit (5) wenigstens ein organisches Speichermaterial (6) und/oder wenigstens ein Speichermaterial (6) aus nachwachsenden Rohstoffen umfasst.

2. Vorrichtung nach Anspruch 1,
wobei das wenigstens eine Speichermaterial (6) aus nachwachsenden Rohstoffen wenigsten einen pflanzlichen Stoff und/oder wenigstens einen tierischen Stoff, insbesondere Schafwolle, umfasst.

3. Vorrichtung nach Anspruch 1 oder Anspruch 2,
wobei das wenigstens eine Speichermaterial (6) aus Fasern und/oder Gewebe und/oder Filz besteht.

4. Vorrichtung nach einem oder mehreren der vorhergehenden Ansprüche,
wobei das wenigstens eine Speichermaterial (6) wenigstens einen Zusatzstoff, insbesondere wenigstens einen Trägerstoff und/oder wenigstens einen Reaktionskatalysator, umfasst.

5. Vorrichtung nach einem oder mehreren der vorhergehenden Ansprüche, wobei die Speichereinheit (5) wenigstens ein Gitterelement (7) umfasst, das das Speichermaterial (6) wenigstens teilweise umgibt.

6. Vorrichtung nach Anspruch 5,
wobei das Gitterelement (7) in Strömungsrichtung des Gases vor dem wenigstens einen Speichermaterial (6) und/oder in Strömungsrichtung des Gases nach dem wenigstens einen Speichermaterial (6), an das Speichermaterial (6) anschließend angeordnet ist.

7. Vorrichtung nach Anspruch 5 oder Anspruch 6,
wobei das Gitterelement (7) wenigstens zum Teil aus einem elektrisch leitfähigen Werkstoff besteht oder einen elektrisch leitfähigen Werkstoff, insbesondere ein Metall, vorzugsweise Kupfer oder eine kupferhaltige Legierung, vorzugsweise an einer Gitteroberfläche, umfasst.

8. Vorrichtung nach einem oder mehreren der vorhergehenden Ansprüche,
wobei die wenigstens eine Sauerstoffaktivierungseinrichtung (3, 4), wenigstens einen Ozonerzeugungsvorrichtung (3) und/oder wenigstens eine Ionenerzeugungsvorrichtung (4) umfasst.

9. Vorrichtung nach einem oder mehreren der vorhergehenden Ansprüche, wobei wenigstens eine Ozonreduzierungseinrichtung (8) vorgesehen ist, die der Speichereinheit (5) in Strömungsrichtung nachgeordnet ist.

10. Vorrichtung nach Anspruch 9,
wobei die Ozonreduzierungseinrichtung (8), einen Ozonkatalysator umfasst, insbesondere ein Manganoxid und/oder ein Kupferoxid und/oder ein Oxid eines Übergangsmetalls, insbesondere Palladium, vorzugsweise aufgebracht auf einem Trägermaterial.

11. Vorrichtung nach einem oder mehreren der vorhergehenden Ansprüchen,
wobei in Strömungsrichtung nach der Speichereinheit (5) und/oder nach der Ozonreduzierungseinrichtung (8) wenigstens ein Sensor (9) zur Überwachung der Ozonkonzentration vorgesehen ist.

12. Vorrichtung nach einem oder mehreren der vorhergehenden Ansprüchen,
wobei in Strömungsrichtung vor der wenigstens einen Sauerstoffaktivierungseinrichtung (3, 4) und/oder in Strömungsrichtung vor und/oder nach der Ozonreduzietungseinrichtung (8) wenigstens ein Sensor (9) zur Überwachung der Stoffkonzentration wenigstens eines organischen Stoffs, insbesondere einer VOC-Konzentration, vorgehen ist.

13. Vorrichtung nach einem oder mehreren der vorhergehenden Ansprüchen,
wobei eine Steuereinrichtung zur Steuerung oder Regelung vorgesehen ist, insbesondere zur Steuerung oder Regelung der wenigstens einen Sauerstoffaktivierungseinrichtung (3, 4).

14. Vorrichtung nach einem oder mehreren der vorhergehenden Ansprüchen,
wobei eine Fördereinrichtung zum Transport des Gases durch die Speichereinheit (5) vorgesehen ist, insbesondere ein Ventilator.

15. Vorrichtung nach einem oder mehreren der vorhergehenden Ansprüchen,
wobei der wenigstens einen Sauerstoffaktivierungseinrichtung (3, 4) in Strömungsrichtung wenigstens eine Filterelement vorgeordnet ist, insbesondere ein Fettabscheidefilter und/oder ein Grobfilter und/oder ein Feinfilter.

16. Verfahren zum Abbau wenigstens eines in einem Gas, insbesondere einem Abgas, enthaltenen organischen Stoffs, unter Verwendung der Vorrichtung nach einem oder mehreren der vorhergehenden Ansprüche,
a) bei dem aktivierter Sauerstoff erzeugt wird und
b) bei dem der aktivierte Sauerstoff mit wenigstens einem organischen Stoff in dem Gas reagiert,
c) wobei wenigstens ein organischer Stoff zumindest teilweise in wenigstens einem organischen Speichermaterial (6) und/oder in wenigstens einem Speichermaterial (6) aus nachwachsenden Rohstoffen gespeichert wird, insbesondere adsorbiert und/oder absorbiert wird, und
d) wobei der organische Stoff in dem Speichermaterial (6) wenigstens teilweise abgebaut wird.

17. Verfahren nach Anspruch 16,
bei dem der aktivierte Sauerstoff, insbesondere Ozon und/oder Sauerstoffradikale und/oder Sauerstoffionen, in einem Rohgasstrom (2) erzeugt werden.

18. Verfahren nach Anspruch 16 oder Anspruch 17,
bei dem der Rohgasstrom vor dem Durchströmen des Speichermaterials (6), insbesondere vor dem Erzeugen von aktiviertem Sauerstoff, in einer Filtereinheit gereinigt wird.

19. Verfahren nach einem oder mehren der Ansprüche 16 bis 18,
bei dem der Abbau wenigstens eines organischen Stoffs durch das wenigstens eine Speichermaterial (6) und/oder durch wenigstens einen dem Speichermaterial (6) zugegebenen Reaktionskatalysator katalysiert wird.

20. Verfahren nach einem oder mehreren der Ansprüche 16 bis 19,
bei dem das wenigstens eine Speichermaterial (6) Feuchtigkeit aus dem Gas aufnimmt.

21. Verfahren nach einem oder mehreren der Ansprüche 16 bis 20,
bei dem aus dem Speichermaterial (6) austretendes Ozon und/oder Sauerstoffradikale in einem Reingasstrom (10) katalytisch in Sauerstoff umgewandelt werden bzw. wird, insbesondere unter Verwendung von Mangandioxid und/oder Kupferoxid und/oder einem Oxid eines Übergangsmetalls, insbesondere Palladium, als Katalysator.

22. Verfahren nach einem oder mehreren der Ansprüche 16 bis 21,
bei dem durch Anlagerung von Sauerstoffionen an wenigstens ein Gitterelement (7) zumindest teilweise aus elektrisch leitfähigem Material, das das Speichermaterial (6) zumindest teilweise umgibt, das Gitterelement (7) und/oder das Speichermaterial (6) aufgeladen werden, wodurch eine Verweilzeit wenigstens eines organischen Stoffs im Speichermaterial (6) erhöht wird.

23. Verfahren nach einem oder mehreren der Ansprüche 16 bis 22,
bei dem die Konzentration eines organischen Stoffes im Rohgasstrom (2) und/oder die Konzentration eines organischen Stoffes im Reingasstrom (10) und/oder die Konzentration von Ozon im Reingasstrom (10) bestimmt wird und/oder eine erzeugte Menge aktivierter Sauerstoff im Rohgasstrom (2) in Abhängigkeit wenigstens einer Konzentration gesteuert bzw. geregelt wird.

24. Verfahren nach einem oder mehreren der Ansprüche 16 bis 23,
bei dem durch Abbau des wenigstens einen in dem Speichermaterial (6) gespeicherten organischen Stoffes das wenigstens eine Speichermaterial (6) regeneriert wird.

## Claims

1. A device for decomposing at least one organic substance contained in a gas, in particular an exhaust gas, comprising
a) at least one oxygen-activating means (3, 4), and
b) at least one storage unit (5) for storing at least one organic substance,
c) wherein the storage unit (5) of the oxygen-activating means (3, 4) is arranged downstream in a flow direction of the gas, and
d) wherein the storage unit (5) contains at least one organic storage material (6) and/or at least one storage material (6) of renewable raw materials.

2. The device according to claim 1,
wherein the at least one storage material (6) of renewable raw materials comprises at least one plant material and/or at least one animal material, in particular sheep's wool.

3. The device according to claim 1 or claim 2,
wherein the at least one storage material (6) consists of fibers and/or fabric and/or felt.

4. The device according to one or more of the preceding claims, wherein the at least one storage material (6) comprises at least one additive, in particular at least one carrier substance and/or at least one reaction catalyst.

5. The device according to one or more of the preceding claims, wherein the storage unit (5) comprises at least one grid element (7) which at least partly surrounds the storage material (6).

6. The device according to claim 5,
wherein the grid element (7) is arranged upstream of the at least one storage material (6) in the flow direction of the gas and/or downstream of the at least one storage material (6) in the flow direction of the gas so as to be adjacent to the storage material (6).

7. The device according to claim 5 or claim 6,
wherein the grid element (7) is made at least in part of an electrically conductive material or comprises an electrically conductive material, in particular a metal, preferably copper or a copper-containing alloy, preferably on a grid surface.

8. The device according to one or more of the preceding claims,
wherein the at least one oxygen-activating means (3, 4) comprises at least one ozone-generating device (3) and/or at least one ion-generating device (4).

9. The device according to one or more of the preceding claims,
wherein at least one ozone-reducing means (8) is provided which is arranged downstream of the storage unit (5) in the flow direction.

10. The device according to claim 9,
wherein the ozone-reducing means (8) comprises an ozone catalyst, in particular a manganese oxide and/or a copper oxide and/or an oxide of a transition metal, in particular palladium, preferably applied to a carrier material.

11. The device according to one or more of the preceding claims,
wherein at least one sensor (9) is provided downstream in the flow direction of the storage unit (5) and/or the ozone-reducing means (8) for monitoring the ozone concentration.

12. The device according to one or more of the preceding claims,
wherein at least one sensor (9) is provided upstream in the flow direction of the at least one oxygen-activating means (3, 4) and/or upstream and/or downstream in the flow direction of the ozone-reducing means (8) for monitoring the material concentration of at least one organic substance, in particular a VOC concentration.

13. The device according to one or more of the preceding claims,
wherein a control means is provided for controlling or regulating, in particular for controlling or regulating the at least one oxygen-activating means (3, 4).

14. The device according to one or more of the preceding claims,
wherein a conveying means, in particular a fan, is provided for transporting the gas through the storage means (5).

15. The device according to one or more of the preceding claims,
wherein at least one filter element, in particular a fat separator filter and/or a coarse filter and/or a fine filter is disposed upstream of the at least one oxygen-activating means (3, 4) in the flow direction.

16. A method for decomposing at least one organic substance contained in a gas, in particular an exhaust gas, using the device according to one or more of the preceding claims,
a) in which activated oxygen is generated, and
b) in which the activated oxygen reacts with at least one organic substance in the gas,
c) wherein at least one organic substance is at least in part stored, in particular adsorbed and/or absorbed, in at least one organic storage material (6) and/or in at least one storage material (6) of renewable raw materials, and
d) wherein the organic substance is at least partially decomposed in the storage material (6).

17. The method according to claim 16,
in which the activated oxygen, in particular ozone and/or oxygen radicals or oxygen ions, is/are generated in a crude gas flow (2).

18. The method according to claim 16 or claim 17,
in which the crude gas flow is purified in a filter unit prior to flowing through the storage material (6), in particular prior to generating activated oxygen.

19. The method according to one or more of claims 16 to 18,
in which the decomposition of at least one organic substance is catalyzed by the at least one storage material (6) and/or by at least one reaction catalyst added to the storage material (6).

20. The method according to one or more of claims 16 to 19,
in which the at least one storage material (6) absorbs moisture from the gas.

21. The method according to one or more of claims 16 to 20,
in which ozone and/or oxygen radicals exiting the storage material (6) is/are catalytically converted into oxygen in a pure gas flow (10), in particular by using manganese dioxide and/or copper oxide and/or an oxide of a transition metal, in particular palladium, as a catalyst.

22. The method according to one or more of claims 16 to 21,
in which, due to oxygen ions depositing on at least one grid element (7) of an at least partially electrically conductive material which at least partly surrounds the storage material (6), the grid element (7) and/or the storage material (6) is/are charged, whereby a dwell time of at least one organic substance in the storage material (6) is increased.

23. The method according to one or more of claims 16 to 22,
in which the concentration of an organic substance in the crude gas flow (2) and/or the concentration of an organic substance in the pure gas flow (10) and/or the concentration of ozone in the pure gas flow (10) is determined and/or a generated amount of activated oxygen in the crude gas flow (2) controlled or regulated as a function of at least one concentration.

24. The method according to one or more of claims 16 to 23,
in which the at least one storage material (6) is regenerated by decomposing the at least one organic substance stored in the storage material (6).

## Revendications

1. Dispositif destiné à décomposer au moins une substance organique contenue dans un gaz, en particulier un gaz d'échappement, comportant
a) au moins un activateur d'oxygène (3, 4) et
b) au moins une unité accumulatrice (5) destinée à accumuler au moins une substance organique,
c) l'unité accumulatrice (5) étant disposée en aval de l'activateur d'oxygène (3, 4) dans un sens d'écoulement du gaz et
d) l'unité accumulatrice (5) comportant au moins un matériau accumulateur organique (6) et/ou au moins un matériau accumulateur (6) en matières premières renouvelables.

2. Dispositif selon la revendication 1,
l'au moins un matériau accumulateur (6) en matières premières renouvelables comportant au moins une substance végétale et/ou au moins une substance animale, en particulier de la laine de mouton.

3. Dispositif selon la revendication 1 ou la revendication 2,
l'au moins un matériau accumulateur (6) étant constitué de fibres et/ou de tissu et/ou de feutre.

4. Dispositif selon l'une ou plusieurs des revendications précédentes,
l'au moins un matériau accumulateur (6) comportant au moins une substance additive, en particulier au moins une substance porteuse et/ou au moins un catalyseur de réaction.

5. Dispositif selon l'une ou plusieurs des revendications précédentes,
l'unité accumulatrice (5) comportant au moins un élément en treillis (7) qui entoure au moins en partie le matériau accumulateur (6).

6. Dispositif selon la revendication 5,
l'élément en treillis (7) étant disposé à la suite du matériau accumulateur (6), en amont de l'au moins un matériau accumulateur (6) dans le sens d'écoulement du gaz et/ou en aval de l'au moins un matériau accumulateur (6) dans le sens d'écoulement du gaz.

7. Dispositif selon la revendication 5 ou la revendication 6,
l'élément en treillis (7) étant au moins en partie constitué d'un matériau électriquement conductible ou comportant un matériau électriquement conductible, en particulier un métal, de préférence du cuivre ou un alliage contenant du cuivre, de préférence sur une surface de treillis.

8. Dispositif selon l'une ou plusieurs des revendications précédentes,
l'au moins un activateur d'oxygène (3, 4) comportant au moins un dispositif de production d'ozone (3) et/ou au moins un dispositif de production d'ions (4).

9. Dispositif selon l'une ou plusieurs des revendications précédentes,
au moins un réducteur d'ozone (8) disposé en aval de l'unité accumulatrice (5) dans le sens d'écoulement étant prévu.

10. Dispositif selon la revendication 9,
le réducteur d'ozone (8) comportant un catalyseur d'ozone, en particulier un oxyde de manganèse et/ou un oxyde de cuivre et/ou un oxyde d'un métal de transition, en particulier le palladium, de préférence appliqué sur un matériau support.

11. Dispositif selon l'une ou plusieurs des revendications précédentes,
au moins un capteur (9) destiné à surveiller la concentration d'ozone étant prévu en aval de l'unité accumulatrice (5) et/ou en aval du réducteur d'ozone (8) dans le sens d'écoulement.

12. Dispositif selon l'une ou plusieurs des revendications précédentes,
au moins un capteur (9) destiné à surveiller la concentration d'au moins une substance organique, en particulier une concentration de VOC, étant prévu en amont de l'au moins un activateur d'oxygène (3, 4) dans le sens d'écoulement et/ou en amont et/ou en aval du réducteur d'ozone (8) dans le sens d'écoulement.

13. Dispositif selon l'une ou plusieurs des revendications précédentes,
un dispositif de commande destiné à commander ou à réguler, en particulier destiné à commander ou réguler l'au moins un activateur d'oxygène (3, 4), étant prévu.

14. Dispositif selon l'une ou plusieurs des revendications précédentes,
un dispositif de refoulement destiné à véhiculer le gaz à travers l'unité accumulatrice (5), en particulier un ventilateur, étant prévu.

15. Dispositif selon l'une ou plusieurs des revendications précédentes,
au moins un élément de filtrage étant disposé en amont de l'au moins un activateur d'oxygène (3, 4) dans le sens d'écoulement, en particulier un filtre de séparation de graisse et/ou un filtre grossier et/ou un filtre fin.

16. Procédé destiné à décomposer au moins une substance organique contenue dans un gaz, en particulier un gaz d'échappement, moyennant le dispositif selon l'une ou plusieurs des revendications précédentes,
a) où de l'oxygène activé est produit et
b) où l'oxygène activé réagit avec au moins une substance organique dans le gaz,
c) au moins une substance organique étant au moins en partie accumulée, en particulier adsorbée et/ou absorbée, dans au moins un matériau accumulateur organique (6) et/ou dans au moins un matériau accumulateur (6) en matières premières renouvelables, et
d) la substance organique étant au moins en partie décomposée dans le matériau accumulateur (6).

17. Procédé selon la revendication 16,
où l'oxygène activé, en particulier de l'ozone et/ou des radicaux d'oxygène et/ou des ions d'oxygène, est/sont produits dans un flux de gaz brut (2).

18. Procédé selon la revendication 16 ou la revendication 17,
où le flux de gaz brut est nettoyé dans une unité de filtrage avant la traversée du matériau accumulateur (6), en particulier avant la production d'oxygène activé.

19. Procédé selon l'une ou plusieurs des revendications 16 à 18,
où la décomposition d'au moins une substance organique est catalysée par l'au moins un matériau accumulateur (6) et/ou par au moins un catalyseur de réaction ajouté au matériau accumulateur (6).

20. Procédé selon l'une ou plusieurs des revendications 16 à 19,
où l'au moins un matériau accumulateur (6) recueille de l'humidité à partir du gaz.

21. Procédé selon l'une ou plusieurs des revendications 16 à 20,
où de l'ozone s'échappant du matériau accumulateur (6) et/ou des radicaux d'oxygène est/sont converti(s) catalytiquement en oxygène dans un flux de gaz propre (10), en particulier en utilisant comme catalyseur du dioxyde de manganèse et/ou de l'oxyde de cuivre et/ou un oxyde d'un métal de transition, en particulier le palladium.

22. Procédé selon l'une ou plusieurs des revendications 16 à 21,
où, par réticulation d'ions d'oxygène sur au moins un élément en treillis (7) constitué au moins en partie de matériau électriquement conductible et entourant au moins en partie le matériau accumulateur (6), l'élément en treillis (7) et/ou le matériau accumulateur (6) se chargent, ce qui accroît un temps de séjour d'au moins une substance organique dans le matériau accumulateur (6).

23. Procédé selon l'une ou plusieurs des revendications 16 à 22,
où la concentration d'une substance organique dans le flux de gaz brut (2) et/ou la concentration d'une substance organique dans le flux de gaz propre (10) et/ou la concentration d'ozone dans le flux de gaz propre (10) est déterminée et/ou une quantité produite d'oxygène activé est commandée ou régulée dans le flux de gaz brut (2) en fonction d'au moins une concentration.

24. Procédé selon l'une ou plusieurs des revendications 16 à 23,
où l'au moins un matériau accumulateur (6) est régénéré par décomposition de l'au moins une substance organique accumulée dans le matériau accumulateur (6).
